# EUROPEAN PATENT APPLICATION

(11) **EP 4 484 241 A1**
(43) Date of publication of application: **01.01.2025**
(21) Application number: 23182543.1
(22) Date of filing: 29.06.2023
(51) Int. Cl.: B60W 40/068

(54) **A METHOD FOR ESTIMATING FRICTION**

(71) Applicant: Polestar Performance AB, 405 31 Gothenburg (SE)
(72) Inventor: SALIF, Ramadan, 418 77 Götebrog (SE); ALBINSSON, Anton, 443 50 Lerum (SE)
(74) Representative: Zacco Sweden AB

(57) **Abstract**

The present invention is related to a method (100) for estimating friction between a road surface and one or more wheels of a vehicle. The method (100) comprises: adjusting (5104) a steering angle of a first steerable wheel of the vehicle to achieve a defined steering angle offset between the first steerable wheel and a second steerable wheel of the vehicle for a defined period of time, wherein the adjusted steering angle of the first steerable wheel is greater than a requested steering angle of the first steerable wheel; and determining (5110) a friction estimate between the road surface and the first steerable wheel based on measured tire dynamics of the first steerable wheel.

## Description

### TECHNICAL FIELD

The disclosed technology relates to the field of automotive engineering. More particularly, it related to a method and device for estimating friction between a road surface and one or more wheels of a vehicle.

### BACKGROUND

Accurate estimation of friction between a road surface and the wheels of a vehicle are important for various vehicle control systems, such as traction control, anti-lock braking systems, and stability control. With the introduction of autonomous or other self-driving functions, knowledge about the friction has also become an important factor in safe operation of the vehicle.

Traditionally, friction estimation has been done by simplified assumptions based on external factors affecting the friction, such as temperature or weather conditions which are known to reduce the grip. If for example the temperature is below freezing in winter condition, the friction can be assumed to be lower than a typical friction level of dry tarmac during summer conditions. However, these solutions may lead to inaccurate results in real-world scenarios and does not take into account localized variations in road surfaces. As an alternative, a rough estimate of the friction has traditionally be determined once the vehicle loses grip. At that point it can be concluded that the grip limit has been reached, and a warning signal of low grip can be sent to the driver or a control system of the vehicle. A drawback of such a solution is that the vehicle in fact already has lost grip, which may pose a potential hazard for passengers or surrounding entities. Further, it often requires a stability intervention, such as activating a traction control system.

Another solution known today is the so-called probe friction by braking. This technique involves simultaneously applying an increase in acceleration of one wheel and braking to another wheel, try to induce a loss of grip under a controlled scenario. This is however disadvantageous for a number of reasons, such as increasing wear and tear on the tires as well as on the brakes and motor. It may further lead to increased energy consumption. It is therefore need for improvements in this field.

### SUMMARY

The herein disclosed technology seeks to mitigate, alleviate or eliminate one or more of the above-identified deficiencies and disadvantages in the prior art to address various problems relating to friction estimation.

The inventors have realized a new and improved way of performing friction estimation. The herein proposed solutions provides for a faster and continuous frictions estimation which further has the potential of obtaining a friction estimated before the friction limit is reached, i.e. before the vehicle actually loses grip. It further has less impact on component wear and energy consumption as compared e.g. to probe friction by braking. By improved friction estimation, better vehicle motion control can be achieved, which improves both stability and safety of the vehicle.

The present inventive concept is at least partly based on the realization that individual control of the wheels, which can be achieved e.g. by steer-by-wire systems, can be utilized to estimate the lateral friction of one of the steerable wheels, without the risk of losing grip entirely. In general, this can be achieved by providing different steer angles between the steerable wheels of the vehicle.

Various aspects and embodiments of the disclosed invention are defined below and in the accompanying independent and dependent claims.

According to a first aspect, there is provided a method for estimating friction between a road surface and one or more wheels of a vehicle. The method comprises adjusting a steering angle of a first steerable wheel of the vehicle to achieve a defined steering angle offset between the first steerable wheel and a second steerable wheel of the vehicle for a defined period of time. The adjusted steering angle of the first steerable wheel is greater than a requested steering angle of the first steerable wheel. The method further comprises determining a friction estimate between the road surface and the first steerable wheel based on measured tire dynamics of the first steerable wheel.

As mentioned above, a possible associated advantage of the proposed method is that a friction estimate can be obtained with improved accuracy, while reducing the risk of the vehicle losing grip, thus also improving safety. In particular, by increasing the steering angle of one of the steerable wheels, it is possible to detect the friction limit and possibly also estimate the friction coefficient while the other wheel(s) maintain their grip and stability of the vehicle. With a better friction estimate, the vehicle control can be improved with increased and more accurate tyre utilization.

In some embodiments herein, the step of adjusting the steering angle of the first steerable wheel may be performed before entering or during a corner, and the first steerable wheel is an inner steerable wheel and the second steerable wheel is an outer steerable wheel of the vehicle.

The inner wheel typically loses grip before the outer wheel during cornering, due to load transfer. Thus, a possible associated advantage of adjusting the steering angle of the inner steerable wheel is that a smaller adjustment of the steering angle is needed to stress the wheel. Further, if loss of grip occurs on the inner wheel, the vehicle as a whole may still maintain grip at least through the outer wheel.

In some embodiments herein, the method further comprises determining if a corner is present in a driving trajectory of the vehicle. Adjusting the steering angle of the first steerable wheel for the defined period of time is then performed before entering or during said corner.

A possible associated advantage is that the method can be performed in response to detecting an upcoming corner and thus obtaining a friction estimate ahead of or during the corner. This information may then be taken into account in operating the vehicle through the corner.

In some embodiments herein, adjusting the steering angle of the first steerable wheel comprises increasing the steering angle of the first steerable wheel relative the requested steering angle of the first steerable wheel by a defined value.

A possible associated advantage is that the steering angle of the first steerable wheel can be adjusted to obtain a lateral force acting on the wheel, without the first steerable wheel losing grip. The defined value may be set e.g. based on a speed of the vehicle or any other parameters affecting the grip of the wheels.

In some embodiments herein, adjusting the steering angle of the first steerable wheel comprises increasing the steering angle of the first steerable wheel until a peak in an estimated aligning moment of the first steerable wheel has been reached.

An aligning moment of a wheel peaks ahead of a peak in friction force (i.e. the point in which the wheel loses grip). Thus, by increasing the steering angle until the peak in the estimated aligning moment of the wheel, a grip limit of the wheel can be obtained. Further, by stopping the increase in steering angle at the peak in aligning moment may avoid causing the wheel to lose grip.

In some embodiments herein, the period of time during which the steering angle of the first steerable wheel is adjusted runs until a peak in an estimated aligning moment of the first steerable wheel has been reached.

For similar reasons as above, reaching the peak in estimated aligning moment may be advantageous in that it can provide an estimate of the grip limit, with the possibility of avoiding losing grip.

In some embodiments herein, the method further comprises adjusting a steering angle of the second steerable wheel by reducing the steering angle of the second steerable wheel relative a requested steering angle of the second steerable wheel.

An effect of which may be that the adjustment of the second steerable wheel can be used to compensate for the increased friction force on the first steerable wheel. A possible associated advantage is thus that a risk of the vehicle losing grip can be reduced.

In some embodiments herein, determining the friction estimate of the road surface is further based on measured tire dynamics of the second steerable wheel.

The tire dynamics of the second wheel may provide for an improved friction estimate, e.g. in terms of accuracy.

In some embodiments herein, the steering angle offset is greater than a steering angle offset during an ordinary driving scenario.

A possible associated advantage is that the first steerable wheel can be stressed to a higher friction level to obtain a better friction estimate.

In some embodiments herein, adjusting the steering angle of the first steerable wheel is performed during a transient state of the vehicle.

By adjusting the steering angle during the transient state may for instance be advantageous in that it reduces a wear and tear on the wheel. It may be further advantageous in that the adjustment in steering angle has less effect on the driving feel of the vehicle, thus improving a user experience.

In some embodiments herein, adjusting the steering angle of the first steerable wheel is performed in response to a current driving environment of the vehicle fulfilling a defined driving environment condition.

A possible associated advantage is that the friction estimate can be determined in response e.g. to a driving environment condition being indicative of a low friction road surface. In other words, by monitoring the driving environment, the method may be performed in scenarios where it is of increased importance to have an estimate of the friction between wheel and road surface.

In some embodiments herein, the method further comprises, in response to the determined friction estimate being below a threshold value, adjusting the steering angle of the first and second steerable wheel based on the determined friction estimate to control the driving trajectory of the vehicle.

A possible associated advantage is that the operation of the vehicle can be adjusted based on the determined friction estimate, thus resulting in a more secure and/or efficient handling of the vehicle. According to a second aspect, there is provided a computer program product comprising instructions which, when the program is executed by a computing device, causes the computing device to carry out the method according to the first aspect. The above-mentioned features and advantages of the first aspect, when applicable, apply to this second aspect as well. In order to avoid undue repetition, reference is made to the above.

According to a third aspect, there is provided a (non-transitory) computer-readable storage medium. The non-transitory computer-readable storage medium stores one or more programs configured to be executed by one or more processors of a processing system, the one or more programs comprising instructions for performing the method according to the first aspect. The above-mentioned features of the first and second aspect, when applicable, apply to this third aspect as well. In order to avoid undue repetition, reference is made to the above.

According to a fourth aspect, there is provided a device for estimating friction between a road surface and one or more wheels of a vehicle. The device comprises control circuitry configured to adjust a steering angle of a first steerable wheel of the vehicle to achieve a defined steering angle offset between the first steerable wheel and a second steerable wheel of the vehicle for a defined period of time. The adjusted steering angle of the first steerable wheel is greater than a requested steering angle of the first steerable wheel. The control circuitry is further configured to determine a friction estimate between the road surface and the first steerable wheel based on measured tire dynamics of the first steerable wheel. The above-mentioned features of the first, second and third aspect, when applicable, apply to this fourth aspect as well. In order to avoid undue repetition, reference is made to the above.

According to a fifth aspect, there is provided a vehicle comprising a device according the fourth aspect, for estimating friction between a road surface and one or more wheels of the vehicle. The above-mentioned features of the first, second, third and fourth aspect, when applicable, apply to this fifth aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments and variants described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method for estimating friction between a road surface and one or more wheels of a vehicle.
Figure 2 is a schematic illustration of a device configured to perform a method for estimating friction between a road surface and one or more wheels of a vehicle.
Figure 3 is a schematic illustration of a vehicle enabled for estimating friction between a road surface and one or more wheels of the vehicle.
Figure 4A and 4B schematically illustrates, by way of example, adjustment of steering angle of a first and second steerable wheel according to some embodiments.
Figure 5A is a graph illustrating, by way of example, steering angle of a first and second steerable wheel as a function of time.
Figure 5B is a graph illustrating, by way of example, an estimated friction force and aligning moment of a first steerable wheel as a function of time.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus or device comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

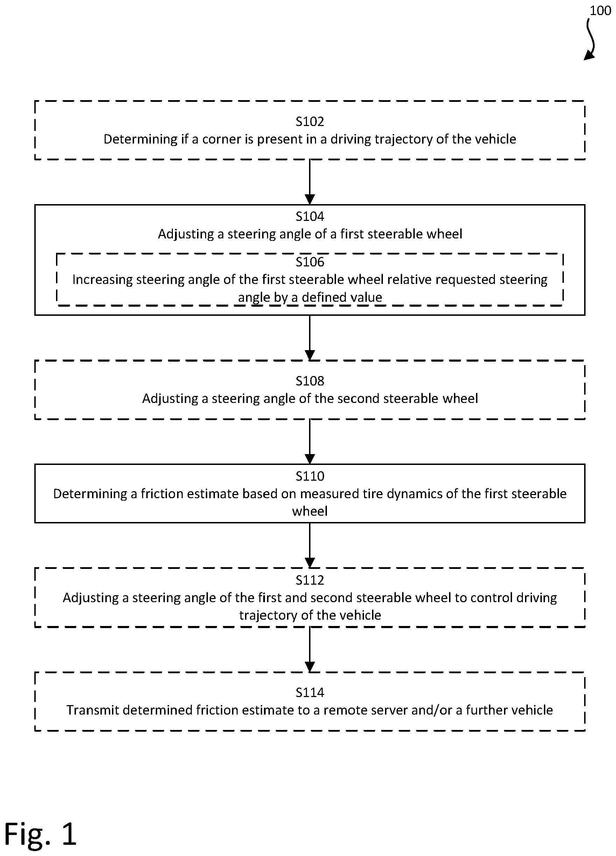

Figure 1 is a schematic flowchart representation of a method 100 for estimating friction between a road surface and one or more wheels of a vehicle.

The method 100 may be a computer-implemented method. The method 100 may for instance be performed by a processing system of the vehicle. The processing system may for example comprise one or more processors and one or more memories coupled to the one or more processors, wherein the one or more memories store one or more programs that perform the steps, services and functions of the method 100 disclosed herein when executed by the one or more processors.

Below, the different steps of the method 100 are described in more detail. Even though illustrated in a specific order, the steps of the method 100 may be performed in any suitable order as well as multiple times. Thus, although Fig. 1 shows a specific order of method steps, the order of the steps may differ from what is depicted. In addition, two or more steps may be performed concurrently or with partial concurrence. For example, the optional steps denoted S112 and S114 can be performed independently of each other, and in any order, based on a specific realization. Such variation will depend on the software and hardware systems chosen and on designer choice. All such variations are within the scope of the invention. Likewise, software implementations could be accomplished with standard programming techniques with rule-based logic and other logic to accomplish the various steps. The above mentioned and described embodiments are only given as examples and should not be limiting to the present invention. Other solutions, uses, objectives, and functions within the scope of the invention as claimed in the below described patent claims should be apparent for the person skilled in the art.

The method 100 comprises adjusting S104 a steering angle of a first steerable wheel of the vehicle to achieve a defined steering angle offset between the first steerable wheel and a second steerable wheel of the vehicle. Put differently, the first steerable wheel of the vehicle is provided with a steering angle that differs from a steering angle of the second steerable wheel by the defined steering angle offset. Thus, the step of adjusting S104 the steering angle of the first steerable wheel may be understood as setting the steering wheel angle of the first steerable wheel to an adjusted steering angle which achieves the defined steering angle offset.

It should be appreciated that during ordinary driving scenarios, the steering angle of the first steerable wheel may differ from the steering angle of the second steerable wheel, e.g. due to variations or the design of the steering system. Example of this includes so-called Ackermann steering, or active toe control. Thus, there may be a steering angle offset between the first and second steerable wheel during ordinary driving conditions. However, this offset is still in accordance with a requested steering angle. The steering angle offset achieved in the step S104 may be greater than a steering angle offset during such an ordinary driving scenario. The amount of steering angle offset is further described below. The wording "ordinary driving scenario" herein refers to a case where no active adjustment of the steering angle that deviates from the requested steering angle, of one of the steerable wheels, is performed.

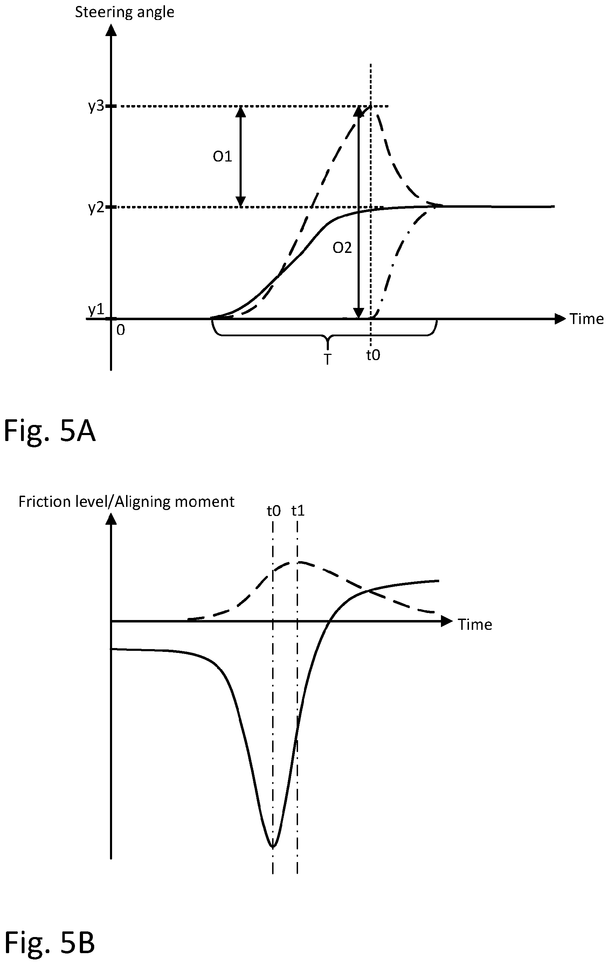

The steering angle of the first steerable wheel is adjusted for a defined period of time. The steering angle offset can be applied to the first steerable wheel momentarily. Alternatively, the steering angle offset can be applied for an extended period of time. The period of time, i.e. for how long the steering angle of the first steerable wheel is adjusted, may depend on the speed of the vehicle, a-priori information relating to the friction between the tire and the road surface (such as temperature), and/or other vehicle parameters affecting the friction, such as the weight of the vehicle, as well as a specific realization. As an example, the period of time may be less than two seconds. More specifically, the period of time may be less than one second. The period of time is further described below in connection with Fig. 5A and 5B.

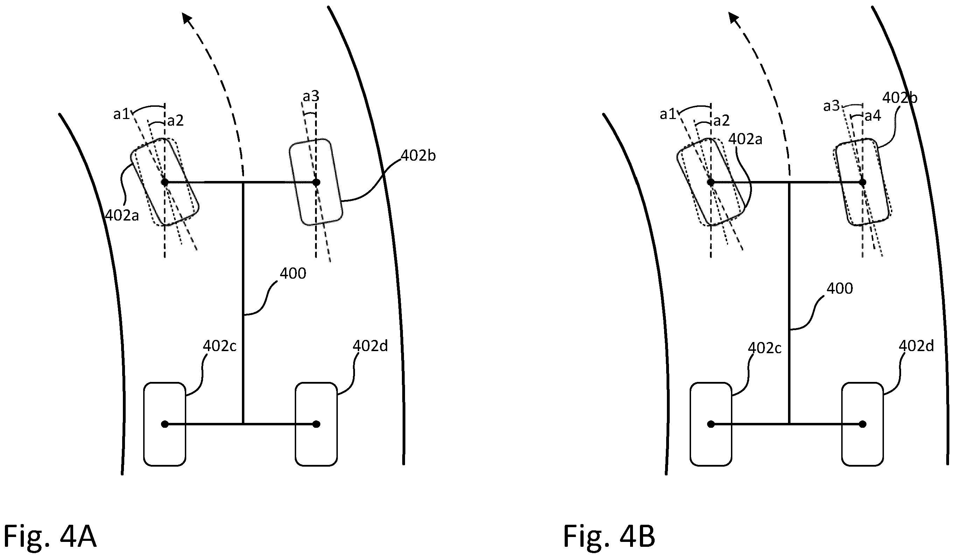

Throughout the present disclosure, the steering angle of a wheel should be understood as the angle at which the wheel is turned about a vertical central axis of the wheel. More specifically, the steering angle may be defined as the angle between the wheel's direction and a direction of a main axis of the vehicle, or the wheel's current orientation and its nominal orientation when the vehicle is travelling in a straight line. The steering angle is further illustrated in Fig. 4A and 4B.

The adjusted steering angle of the first steerable wheel is greater than a requested steering angle of the first steerable wheel. In other words, the steering angle of the first steerable wheel is adjusted such that it turns more than the requested steering angle. Thus, the adjusted steering angle as mentioned above is greater than the requested steering angle.

The wording "requested steering angle" should within the present disclosure be construed as a steering angle requested by the driver (i.e. based on a steering wheel angle) or by an autonomous driving system, for driving the vehicle along a planned path. In other words, the requested steering angle may be understood as an inputted, given or planned steering angle. After the defined period of time, the steering angle of the first steerable wheel may be adjusted so that it returns to the requested steering angle. In summary, the steering angle of the first steerable wheel is adjusted such that it turns more than its requested steering angle and the steering angle of the second steerable wheel. By increasing the steering angle of the first steerable wheel, is may be possible to find a friction limit.

Adjusting S104 the steering angle of the first steerable wheel may comprise increasing S106 the steering angle of the first steerable wheel relative the requested steering angle of the first steerable wheel by a defined value. In other words, the defined value corresponds to an angle offset between the requested steering angle and the adjusted (actual) steering angle. The defined value may be based on a speed of the vehicle. The defined value may be further based on a value of the requested steering angle. According to one example, the defined value may be between 0 and 20 degrees. In yet another example, the defined value may be between 0 and 10 degrees. In yet another example, the defined magnitude may be between 0 and 5 degrees. By increasing the steering angle of the first steerable wheel by the defined amount, a lateral force (or friction force) acting on the first steerable wheel can be obtained without the first steerable wheel loosing grip. From this, a friction estimate (further described below) can be determined as an approximate friction limit indicative of a current safety margin (from the requested steering angle), before the vehicle risks losing grip. In other words, the friction limit provides an estimated limit for improved tire utilization, even though the limit may not be the absolute limit.

In some embodiments, adjusting S104 the steering angle of the first steerable wheel may comprise increasing S106 the steering angle of the first steerable wheel until a peak in an estimated aligning moment of the first steerable wheel has been reached. The term "aligning moment" herein refers to the torque or moment exerted on a wheel of the vehicle, when the wheel is subjected to lateral forces, such as during steering manoeuvres or cornering. The aligning moment is generated at the contact patch between the wheel and the road surface and when the normal force on the vehicle is shifted away from a centre of the wheel, as seen from above. The aligning moment may be estimated based on measured tire dynamics and vehicle parameter data.

In some embodiments, the period of time during which the steering angle of the first steerable wheel is adjusted S104 may run until a peak in an estimated aligning moment of the first steerable wheel has been reached.

By adjusting the steering angle of the first steerable wheel until a peak in the estimated aligning moment is reached, the absolute friction limit may be determined. In other words, a friction coefficient between the road surface and the first steerable wheel may be determined. This limit can be obtained by turning the first steerable wheel until it loses grip. However, due to only the first steerable wheel being adjusted to loose grip, the vehicle may still maintain control through the second steerable wheel (and any further wheels of the vehicle). As an alternative to detecting a peak in aligning moment, it may be detected whether an aligning moment derivative with respect to slip angle is starting to decrease.

The second steerable wheel may have a requested steering angle associated with the second steerable wheel. In other words, the steering angle of the second steerable wheel may remain unchanged during the period of time of adjusting the steering angle of the first steerable wheel. However, in some embodiments, the steering angle of the second steerable wheel may be adjusted as well. More specifically, the method 100 may further comprise adjusting S108 a steering angle of the second steerable wheel. The steering angle of the second steerable wheel may be adjusted S108 by reducing the steering angle of the second steerable wheel relative a requested steering angle of the second steerable wheel. In other words, the steering angle of the second steerable wheel may be set to an adjusted steering angle being smaller than the requested steering angle. Adjusting the steering angle of the second steerable wheel may be advantageous in that it can be used to balance the increased stress of the first steerable wheel due to its increase in steering angle. Put differently, adjusting the second steerable wheel may provide for improving the stability of the vehicle. The second steerable wheel may also be adjusted in a reactive manner such as if the first steerable wheel loses grip, the second steerable wheel is adjusted to compensate for this. The second steerable wheel may be adjusted during the same defined period of time as the first steerable wheel. Alternatively, the period of time may differ. For instance, the period of time of adjusting the second steerable wheel may be non-overlapping, or only partly overlapping the period of time of adjusting the first steerable wheel. Moreover, the steering angle of the second steerable wheel may be adjusted such that the vehicle continues to follow a planned trajectory. Put differently, the steering angle of the second steerable wheel can be reduced to compensate for the steering angle of the first steerable wheel being increased. Thereby the planned trajectory can be followed.

The first and second steerable wheel may correspond to a pair of wheels attached to a common wheel axis. The first and second steerable wheel of the vehicle may be a first and second front wheel of the vehicle. In another example, the first and second steerable wheel may be a first and second rear wheel of the vehicle. The vertical load (or normal force) may vary across the wheel axis due to load transfer when driving the vehicle. In a corner for example, the vertical load partly transfers from the inner wheels (i.e. closest to the apex of the curve) to the outer wheels due to the centripetal force. Out of the pair of wheels, the first steerable wheel may advantageously be the wheel having the lowest normal force out of the two. In other words, the first steerable wheel may be the wheel having a lower normal force than the second steerable wheel. Thus, in the case of a corner, the first steerable wheel may be an inner wheel, and the second steerable wheel may be an outer wheel of the vehicle. By applying the adjusted steering angle to the wheel experiencing the lowest normal force is associated with a number of advantages. Due to the lower normal force, the friction force experienced by the first (or inner) steerable wheel will be lower than the second (or outer) steerable wheel, meaning that the first steerable wheel will be the first to lose grip. Thus, if loss of grip is detected on the first steerable wheel, the second steerable wheel can be adjusted in response, to compensate for the loss of grip. In other words, the first steerable wheel may lose grip while the second steerable wheel still has grip, thus reducing the risk of the vehicle as a whole losing grip.

The method further comprises determining S110 a friction estimate between the road surface and the first steerable wheel based on measured tire dynamics of the first steerable wheel. The friction estimate should be understood as any data indicative of the friction. The friction estimate may for instance be an estimated friction limit. The friction estimate may for instance be an estimated friction coefficient between the road surface and the wheel or the absolute friction limit (i.e. the highest possible friction limit). This may be the case e.g. when the peak in aligning moment is reached, or the first steerable wheel loses grip. Alternatively, the friction estimate may be a level up to which is can be known that the tires will still maintain grip, although not the highest possible limit. Based on the friction estimate of the first steerable wheel, a friction estimate of the other wheels of the vehicle may be determined based on e.g. vehicle parameter data such as position of the wheels relative each other, and load distribution of the vehicle.

The measured tire dynamics may comprise data obtained from an inertial measurement unit. The measured tire dynamics may comprise information indicative of one or more of an aligning moment, a lateral force, steering wheel angle, wheel speed, vertical load, slip ratio and/or a slip angle of the first steerable wheel. By being "indicative of" it is herein meant that the above mentioned properties may be obtained directly from sensory measurements (such as from an inertial measurement unit of the vehicle), or indirectly derived from one or more measureable properties. It should be further noted that the friction estimate may be further determined based on further vehicle parameter data, such as the vehicle speed, weight, weight distribution etc. It should be appreciated that the measured tire dynamics should be measured in connection with (e.g. during and/or shortly before/after) adjusting S104 the steering angle. In other words, the measured tire dynamics may to some extent reflect (or be affected by) the adjusted steering angle. The measured tire dynamics may in a broader sense be indicative of how the vehicle (or its wheels, in particular steerable wheels) reacts to, or is affected by, the adjusted steering angle.

Determining S110 the friction estimate of the road surface may be further based on measured tire dynamics of the second steerable wheel. Determining the friction estimate based on measured tire dynamics of both the first and second steerable wheel may provide for a more accurate and reliable friction estimate.

The method 100 as described herein may be performed at any point during which the vehicle is moving. As an example, the method 100 may be performed continuously, such as at a set interval or at set points in time. In another example, the method may be performed in a rule-based manner. An example of such case may be to perform the method in response to a suspicion of low friction (e.g. based on temperature data, or weather condition). More specifically, adjusting S104 the steering angle of the first steerable wheel may be performed in response to a current driving environment fulfilling a defined driving environment condition. The defined driving environment condition may e.g. be related to a weather condition and/or a road surface condition. The weather condition may e.g. be temperature, precipitation, amount of precipitation etc. The road surface condition may e.g. be a type of road surface (tarmac, gravel etc.), or if the road surface is covered e.g. by ice, water, leaves, or is dry. Thus, adjusting S104 the steering angle of the first steerable wheel may be performed e.g. in response to the current driving environment being indicative or the road being slippery. In yet another example, the method may be performed repeatedly, so as to get a more accurate estimate. For instance, a moving average can be used to gain confidence over several estimation events.

Another example may be to perform the method 100 in response to a certain driving event, such as approaching or entering a corner, or an up- or down-hill, where the friction is of greater importance. More specifically, the method 100 may be a method 100 for estimating friction between a road surface and one or more wheels of a vehicle prior to an upcoming corner in a trajectory of the vehicle.

In some embodiments, the step of adjusting S104 the steering angle of the first steerable wheel is performed during a transient state of the vehicle. The transient state herein refers to the transitional phase or period during which the vehicle is undergoing a change in its operating condition or moving from one steady state to another. In other words, it is the interval when the vehicle's behaviour, performance, or response is adjusting or adapting to new inputs or conditions. The transient state typically occurs during dynamic events, such as acceleration, deceleration, braking, or changes in steering input. The transient state encompasses the period of time when the vehicle is in transition from one steady-state condition to another steady-state condition. During the transient state, various vehicle dynamics parameters and characteristics may change, including acceleration, velocity, yaw rate, roll, pitch, and stability. A particular example of a transient state is the period in which a vehicle is entering a corner and the steering input is gradually increased up to a desired level.

In contrast, by steady state it is herein meant e.g. a phase where the vehicle operates with a consistent and unchanging condition, such as travelling at a constant speed in a straight line, or at constant speed in a turn with constant radius.

Adjusting S104 the steering angle of the first steerable wheel during the transient state may be advantageous in that a tyre wear can be reduce, compared to doing it during steady state. It may be further advantageous in that the adjustment of the steering angle becomes less noticeable to the driver of the vehicle, thus improving user experience.

As stated above, the method 100 may be a method 100 for estimating friction between a road surface and one or more wheels of the vehicle during a transient state of the vehicle. Alternatively, the method 100 may be a method 100 for estimating friction between a road surface and one or more wheels of a vehicle prior to, or during, a corner in a trajectory of the vehicle. In particular, the method 100 may be performed any time from just before entering a corner, to during the corner. This may be advantageous in that the friction estimate can be obtained ahead of or during the corner, such that the vehicle control can be adjusted thereafter.

The method 100 may further comprise determining S102 if a corner is present in a driving trajectory of the vehicle. Adjusting S104 the steering angle of the first steerable wheel for the defined period of time may then performed before entering or during said corner. Determining S102 whether a corner is present in the driving trajectory may be based on sensor data obtained from one or more sensors of the vehicle. For example, a corner can be detected based on a measured steering wheel input from the driver, or based on data from e.g. a camera, LIDAR, RADAR or the like. Alternatively, or in combination, the corner can be detected based on positional data of the vehicle (such as GPS data), and/or map data.

Adjusting S104 the steering angle of the first steerable wheel may be performed before entering or during a corner. In that case, the first steerable wheel may be an inner steerable wheel and the second steerable wheel may be an outer steerable wheel of the vehicle. Put differently, the first steerable wheel may be the wheel (of a wheel axis pair) experiencing less normal force than the other.

The method 100 may further comprise, in response to the determined friction estimate being below a threshold value, adjusting S112 the steering angle of the first and second steerable wheel based on the determined friction estimate to control the driving trajectory of the vehicle. The steering angle of the first and second steerable wheel may be adjusted S112 e.g. by reducing or increasing the steering angle. In other words, the estimated friction being below the threshold may be used to indicate that the friction is low. In response to this, the steering angle can be reduced in order for the vehicle to maintain a planned trajectory. Alternatively, or in combination, a speed of the vehicle may be adjusted based on the determined friction estimate, in response to the determined friction estimate being below the threshold value. As an example, the steering angle of the first and/or second wheel and the speed of the vehicle may be reduced to compensate for the determined friction estimate. In another example, operating parameters of a vehicle control system may be adjusted, in response to the determined friction estimate being below the threshold. The vehicle control system may e.g. be a steer assist function, a brake assist function or an autonomous driving system. If, for instance, the friction estimate indicates a low friction of the road surface, a threshold value for when the brake assist function should intervene may be lowered, or a sensitivity of a steer assist function may be increased.

The method 100 may further comprise, in response to the determined friction estimate being below a threshold value, transmitting a notification to a driver or passenger of the vehicle. The notification may be indicative of low friction of the road surface. Thus, the notification may serve as a warning of low friction to the driver. The threshold value may be the same, or different, from the threshold value mentioned above, in connection with the step denoted S112.

The method 100 may further comprise transmitting S114 the determined friction estimate to a remote server and/or to a further vehicle. In other words, information pertaining to the determined friction estimate may be communicated to another unit. For instance, in case the determined friction estimate is indicative of a low friction in a certain area as determined by the vehicle, this information can be shared with further road users e.g. through cloud services.

Executable instructions for performing these functions are, optionally, included in a non-transitory computer-readable storage medium or other computer program product configured for execution by one or more processors.

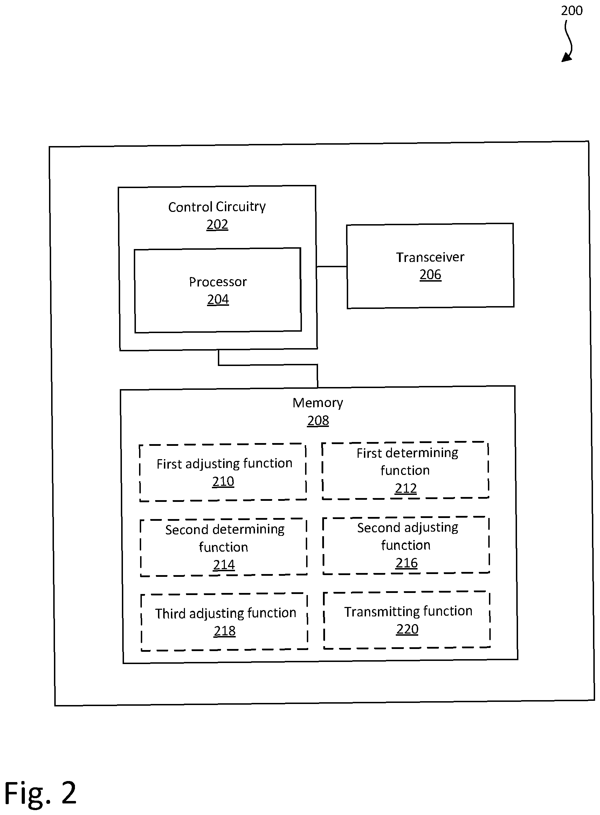

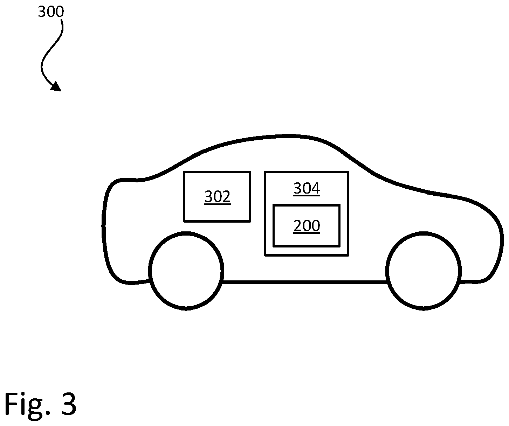

Figure 2 is a schematic illustration of a device 200 for estimating friction between a road surface and one or more wheels of a vehicle. In particular, the device 200 is configured to perform the techniques described in the foregoing with reference to Fig. 1. The device 200 may be provided locally in the vehicle. However, as can be readily understood, the device 200 may be provided as an external device or unit to the vehicle, such as a remote server or cloud implementation. In such case, the device 200 may be communicatively connected to the vehicle. An example of a vehicle is further described below in connection with Fig. 3.

The device 200 comprises control circuitry 202. The control circuitry 202 may physically comprise one single circuitry device. Alternatively, the control circuitry 202 may be distributed over several circuitry devices. As an example, the device 200 may share its control circuitry 202 with other parts of the vehicle, such as a control system of the vehicle.

As shown in the example of Fig. 2, the device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the device 200. The control circuitry 202 may include a processor 204, such as a central processing unit (CPU), microcontroller, or microprocessor. The processor 204 may be configured to execute program code stored in the memory 208, in order to carry out functions and operations of the device 200. The control circuitry 202 is configured to perform the steps of the method 100 as described above in connection with Fig. 1. The steps may be implemented in one or more functions stored in the memory 208. The control circuitry 202 may be configured to execute a first adjusting function 210, a first determining function 212, a second determining function 214, a second adjusting function 216, a third adjusting function 218 and/or a transmitting function 220. It should be noted that the various function and operation of the device 200 may be implemented in additional functions than those described herein. In addition, one or more of the above functions may be implemented together in a common function. For example, the first and second determining function 212, 214 may be implemented by a common determining function. Further, the first, second and third adjusting function 210, 216 and 218 may be implemented by a common adjusting function.

The transceiver 206 may be configured to enable the device 200 to communicate with other devices. The transceiver 206 may both transmit data from and receive data to the device 200. For example, the device 200 may collect data one or more sensors of the vehicle, such as from an inertial measurement unit. Further, the device 200 may transmit data to other units or systems of the vehicle. As an example, the device 200 may transmit a determined friction estimate to a control system of the vehicle, or transmit a signal to a user interface for notifying a driver of the vehicle. Further, the device 200 may transmit data (e.g. data related to a friction estimate) to one or more further vehicles, or to a remote server or the like.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long term data storage and a volatile memory that functions as system memory for the device 200. The memory 208 may exchange data with the circuitry 202 over the data bus. Accompanying control lines and an address bus between the memory 208 and the circuitry 202 also may be present.

Functions and operations of the device 200 may be implemented in the form of executable logic routines (e.g., lines of code, software programs, etc.) that are stored on a non-transitory computer readable recording medium (e.g., the memory 208) of the device 200 and are executed by the circuitry 202 (e.g. using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. Also, while the described functions and operations may be implemented in software, such functionality may as well be carried out via dedicated hardware or firmware, or some combination of one or more of hardware, firmware, and software. In the following, the function and operations of the device 200 is described.

The control circuitry 202 is configured to adjust a steering angle of a first steerable wheel of the vehicle to achieve a defined steering angle offset between the first steerable wheel and a second steerable wheel of the vehicle for a defined period of time. The adjusted steering angle of the first steerable wheel is greater than a requested steering angle of the first steerable wheel. This may be performed e.g. by execution of the first adjusting function 210. Adjusting the steering angle of the first steerable wheel may be performed before entering or during a corner. The first steerable wheel may then be an inner steerable wheel and the second steerable wheel may be an outer steerable wheel of the vehicle.

Adjusting the steering angle of the first steerable wheel may comprise increasing the steering angle of the first steerable wheel relative the requested steering angle of the first steerable wheel by a defined value. As explained above, the defined value may be based on a speed of the vehicle.

The control circuitry 202 is further configured to determine a friction estimate between the road surface and the first steerable wheel based on measured tire dynamics of the first steerable wheel. This may be performed e.g. by execution of the first determining function 212.

The control circuitry 202 may be further configured to determine if a corner is present in a driving trajectory of the vehicle. This may be performed e.g. by execution of the second determining function 214. Adjusting the steering angle of the first steerable wheel for the defined period of time may be performed before entering or during said corner.

The control circuitry 202 may be further configured to adjust a steering angle of the second steerable wheel by reducing the steering angle of the second steerable wheel relative a requested steering angle of the second steerable wheel. This may be performed e.g. by execution of the second adjusting function 216.

The control circuitry 202 may be further configured to, in response to the determined friction estimate being below a threshold value, adjust the steering angle of the first and second steerable wheel based on the determined friction estimate to control the driving trajectory of the vehicle. This may be performed e.g. by execution of the third adjusting function 218.

The control circuitry may be further configured to transmit the determined friction estimate to a remote server and/or to a further vehicle. This may be performed e.g. by the transmitting function 220.

It should be noted that principles, features, aspects, and advantages of the method 100 as described above in connection with Fig. 1, are applicable also to the device 200 described herein. In order to avoid undue repetition, reference is made to the above.

Figure 3 is a schematic illustration of a vehicle 300 in accordance with some embodiments. The vehicle 300 is to be understood as an example of the vehicle as described in the foregoing in connection with Fig. 1 and 2. In particular, the vehicle 300 comprises the device 200 as described above in connection with Fig. 2. Thus, the vehicle 300 is enabled for estimating friction between a road surface and one or more wheels of the vehicle 300. As used herein, a "vehicle" is any form of motorized transport. For example, the vehicle 400 may be any road vehicle such as a car (as illustrated herein), a (cargo) truck, a bus, etc. However, the present inventive concept will be explained in connection with a vehicle having four wheels.

As is readily understood, the vehicle 300 may comprise any systems or components commonly found in ordinary vehicles. In particular, the vehicle 300 comprises one or more sensors 302. The one or more sensors 302 is configured to obtain sensor data of at least one wheel of the vehicle, or in other words tire dynamics data. The one or more sensors 302 may for instance comprise a wheel speed sensor, a wheel angle sensor, an inertial measurement unit, etc. The vehicle 300 may further comprise sensors configured to perceive the surrounding environment of the vehicle, such as one or more cameras, LIDAR, RADAR, etc. The surrounding environment of the vehicle is to be understood as a general area around the vehicle in which objects (such as other vehicles, landmarks, obstacles, etc.) can be detected and identified by vehicle sensors (RADAR, LIDAR, cameras, etc.), i.e. within a sensor range of the vehicle. The sensors configured to perceive the surrounding environment may e.g. be used to detect whether a corner is present in a driving trajectory of the vehicle 300.

The vehicle 300 further comprises a steering system (not shown) configured to control a steering angle of at least two steerable wheels. More specifically, the steering system is configured to allow individual control of the steering angle of the at least two steerable wheels. The steering system may e.g. be a so called steer-by-wire system, or a mechanical steering system allowing individual control of the at least two steerable wheels.

The vehicle 300 further comprises a control system 304. The control system 304 is configured to carry out overall control of functions and operations of the vehicle 300. The control system 304 may comprise control circuitry and a memory. The control circuitry may physically comprise one single circuitry device. Alternatively, the control circuitry may be distributed over several circuitry devices. As an example, the control system 304 may share its control circuitry with other parts of the vehicle. The control circuitry may comprise one or more processors, such as a central processing unit (CPU), microcontroller, or microprocessor. The one or more processors may be configured to execute program code stored in the memory, in order to carry out functions and operations of the vehicle 300. The processor(s) may be or include any number of hardware components for conducting data or signal processing or for executing computer code stored in the memory. The memory 506 may include database components, object code components, script components, or any other type of information structure for supporting the various activities of the present description.

The device 200 as described above in connection with Fig. 2 may share its control circuitry with the control circuitry of the vehicle 300. Thus, the device 200 may be implemented as part of the control system 304 of the vehicle 300. Alternatively, the device 200 may be implemented as part of any other system or module of the vehicle 300. Alternatively, the device 200 may be implemented as a separate module of the vehicle 300.

Figure 4A schematically illustrates, by way of a first example, adjustment of steering angles of a first and second steerable wheel according to some embodiments. In particular, Fig. 4A illustrates a vehicle 400 in a top-down view. The vehicle 400 is to be understood as being a vehicle 300 as described in the forgoing.

The vehicle 400 comprises four wheels. More specifically, the vehicle 400 comprises a first steerable wheel 402a and a second steerable wheel 402b. The vehicle 400 further comprises a first and second non-steerable wheel 402c, 402d. The first and second steerable wheel 402a, 402b herein corresponds to a pair of front wheels. Thus, the first and second steerable wheel 402a, 402b may in the following be referred to as a first and second front wheel 402a, 402b respectively. The first and second non-steerable wheel 402c, 402d corresponds to a pair of rear wheels, and may in the following be referred to as a first and second rear wheel 402c, 402d respectively.

As explained in the foregoing, the first steerable wheel 402a should advantageously be the wheel having the lowest normal force out of the pair of steerable wheels. In the illustrated example, the vehicle 400 is illustrated as travelling through a left turn. Due to the centripetal force, the load of the vehicle 400 is transferred towards the outer wheels (herein the second front wheel 402b and the second rear wheel 402d) of the vehicle. Thus, the normal force on the inner wheels (herein the first front wheel 402a and the first rear wheel 402c) is reduced, while the normal force on the outer wheels is increased. Thus, in the present case, the first steerable wheel 402a is an inner steerable wheel 402a, and the second steerable wheel 402b is an outer steerable wheel 402b. The wording "inner" and "outer" herein refers to a relative position of the wheels in a radial direction of the corner. Put differently, an inner wheel is closer to a center point or apex of the corner than an outer wheel. As an effect, the inner wheel will travel a shorter distance than the outer wheel when the vehicle is travelling through a corner.

It is to be appreciated that, as stated above, the principles of the disclosed technology may be applicable to any driving scenario, such as both right and left turns, during a straight piece of road, or before (or while) entering a corner.

When driving through the corner, the first and second steerable wheel 402a, 402b are given a requested steering angle to drive the vehicle along an intended or planned path (illustrated by broken line arrow). The requested steering angle may be given by an angle of the steering wheel as inputted by the driver, or by an autonomous driving system.

The steering angle herein refers to the angle at which a wheel is turned in relation to its nominal (or straight) position. In other words, the steering angle can be defined as the angle between the actual direction of the wheel and a direction parallel to a main axis of the vehicle. In the illustrated example, the requested steering angle of the first steerable wheel 402a is denoted by the angle a2, and the requested steering angle of the second steerable wheel 402b is denoted by the angle a3. The requested steering angle of the first and second steerable wheel 402a, 402b may be the same. In other words, the first and second steerable wheel 402a, 402b may be turned by the same requested amount given a certain steering input (i.e. from the steering wheel or autonomous driving system). However, the requested steering angle of the first and second steerable wheel 402a, 402b may differ to some extent to compensate for the different in path length of the inner wheel versus the outer wheel, e.g. in the case of so-called Ackermann steering.

As explained above, e.g. in connection with Fig. 1, the steering angle of the first steerable wheel 402a is adjusted during a defined period of time to achieve a defined steering angle offset between the first steerable wheel 402a and the second steerable wheel 402b. Fig. 4A illustrates the vehicle 400 in such a state, e.g. during such period of time. Instead of the requested steering angle a2 of the first steerable wheel 402a (herein illustrated by the wheel in dotted lines), the first steerable wheel 402 has an adjusted (or actual) steering angle denoted by the angle a1. The adjusted steering angle a1 is greater than the requested steering angle a2 of the first steerable wheel 402a. The steering angle offset is thereby obtained as the difference between the angle a1 and the angle a3. Alternatively, the steering angle offset may be defined as the difference between the adjusted steering angle a1 and the requested steering angle a2 of the first steerable wheel 402a.

Fig. 4B schematically illustrates, by way of a second example, adjustment of steering angles of a first and second steerable wheel according to some embodiments. In particular, Fig. 4B illustrates the same vehicle 400 as in Fig. 4A, but with different adjusted steering angles of the first and second steerable wheels 402a, 402b.

In the illustrated example, it is shown that in addition to adjusting the steering angle of the first steerable wheel 402a to the steering angel a1, also the steering angle of the second steerable wheel 402b can be adjusted. As in the previous example, the second steerable wheel 402b has a requested steering angle a3, which in Fig. 4B is represented by the second steerable wheel 402b in dotted lines. However, the steering angle of the second steerable wheel 402b is adjusted so as to achieve the steering angle denoted by the angle a4. In this example, the second steerable wheel 402b has been adjusted such that the steering angle is reduced compared to the requested steering angle a3. In other words, the adjusted steering angle a4 of the second steerable wheel 402b is smaller than the requested steering angle a3 of the second steerable wheel 402b. The illustrated example shows a time instance where the steering angle of the second steerable wheel 402b is adjusted at a same time as the first steerable wheel 402a. As explained in the foregoing, the steering angles of the first and second steerable wheels 402a, 402b may be adjusted during the same defined period of time. However, in some embodiments, they may be adjusted during different period of times. The different period of times may at least partly overlap each other.

In the above described examples of Fig. 4A and 4B, the front pair of wheels are steerable wheels, while the rear wheels are non-steerable wheels. It should however be noted that in some embodiments, the pair of rear wheels may be steerable wheels, while the pair of front wheels may be non-steerable wheels. Moreover, in some embodiments, all wheels of the vehicle may be steerable wheels. The principles of adjusting the steering angle as explained above may then be applied to any of the wheels.

Figure 5A is a graph illustrating, by way of example, the steering angle of the first and second steerable wheel as a function of time, for the case where both the first and second steerable wheel 402a, 402b are adjusted in a left turn, as in the case illustrated in Fig. 4B. The curve in solid line represents a requested steering angle (herein the same for both the first and second steerable wheel). As illustrated by this curve, the requested steering angle increases from a zero value (i.e. from a state of driving in a straight line) up to a requested steering angle y2 (e.g. a highest requested steering angle while driving through the corner). This transition of the requested steering angle spans over a period of time T. This period of time, during which the steering angle changes, may be understood as the transient state of the vehicle.

The curve in broken lines represents the adjusted (or actual) steering angle of the first steerable wheel 402a. Over the same period of time T, as mentioned above, the adjusted steering angle of the first steerable wheel 402a is adjusted from the zero value up to a value y3 at a point in time t0. Thereby, a first offset O1 in steering angle between the adjusted steering angle of the first steerable wheel and the requested steering angle is achieved. This offset in angle may correspond to the defined value as mentioned above in connection with Fig. 1.

In case the steering angle of the second steerable wheel 402b is the same as the requested steering angle, the first offset O1 also defines a steering angle offset between the first and second steerable wheel. However, in the illustrated example, also the steering angle of the second steerable wheel is adjusted. The curve in dash-dot line represents the adjusted steering angle of the second steerable wheel. The steering angle of the second steerable wheel is adjusted in the sense that it is kept at the zero value up until the point in time t0. Thereby, at the point in time t0, a second steering angle offset O2 is achieved between the first and second steerable wheel. After the point in time t0, the steering angle of the first and second steerable wheel can be adjusted so as to match the requested steering angle.

In the illustrated example, the steering angles of the first and second steerable wheel are adjusted over the entire transient state, T. However, the steering angles of the first and second steerable wheel may be adjusted for a shorter period of time during, or at least partly overlapping with the transient state. As an example, the steering angle of the first (and possible also second) steerable wheel may be adjusted during less than 1 second, or more specifically during less than 0.5 seconds. In some embodiments, the period of time may be selected as short as possible, but still long enough for the vehicle to settle into a (temporarily) steady state after the beginning of the adjustment. Thus, the period of time may be ended when the vehicle settles into a steady state.

In some embodiments, the steering angles may be adjusted during a steady state of the vehicle, e.g. when the requested steering angle is constant. In some embodiments, the period of time during which the steering angle of the first steerable wheel (and optionally the second steerable wheel) is adjusted may run until the first steerable wheel loses grip, or when a peak in aligning moment of the first steerable wheel has been reached. For example, the steering angle of the first and second steerable wheel can be kept at their respective values y3 and y1 until that point is reached. However, in the present example, the steering angle of the first steerable wheel is increased until the peak in aligning moment is reached, as will be further explained in the following in connection with Fig. 5B. After that point, the steering angle of the first and second steerable wheel are adjusted to the requested steering angle.

Is it to be appreciated that the graph of Fig. 5A is to be seen as a non-limiting example. The actual values and shapes of the curves may differ in a real-world implementation of the present inventive concept. For example, the actual values of the adjusted steering angles may depend on a speed of the vehicle. Further, the adjustments in steering angle may be selected such as to not disrupt the turn in feel of the vehicle. This may be mitigated by compensating for the increase in steering angle on the first steerable wheel with a reduction in steering angle of the second steerable wheel.

Figure 5B is a graph illustrating, by way of example, an estimated utilized friction level (e.g. measured in Newton) and an estimated aligning moment (e.g. measured in Newton meters) of the first steerable wheel as a function of time. More specifically, the graph of Fig. 5B shows the utilized friction level and aligning moment on the first steerable wheel when its steering angle is adjusted according to the example of Fig. 5A. The solid line represents the aligning moment of the wheel, and the dashed line represents the utilized friction level between the wheel and the road surface.

As known in the art, the aligning moment of a wheel reaches its maximum (or minimum depending on sign definition) value at a point in time (herein denoted by t0) before a peak in friction level (herein denoted by t1). The peak in friction level, corresponds to a friction limit or, in put differently, the point in time at which the wheel loses grip. This relationship may be utilized by a controller configured to perform the adjustment in steering angle as explained in the following.

In the illustrated example of Fig. 5A and 5B, the steering angle of the first steerable wheel is increased until a peak (or herein a valley) of the aligning moment is reached. Thus, the point of time of the (negative) peak in aligning moment coincides with the point in time t0 at which the adjusted steering angle of the first steerable wheel reaches its highest value. At a point in time t1 after the peak in aligning moment, a peak in utilized friction level (or loss of grip) is obtained. Thus, by observing the aligning moment of the first steerable wheel, an indication of that the friction limit is about to be reached can be obtained. Thereby, the adjusted steering angle of the first steerable wheel can be reduced before irretrievably losing grip. Additionally, the second steerable wheel may, as in the illustrated example, be adjusted to the requested steering angle in response to the peak in aligning moment of the first steerable wheel being reached.

It should be appreciated that Fig. 5B only illustrates one example of controlling the adjustment of the steerable wheels. Other metrics may be used as alternatives or in combination, such as looking at an estimated lateral force of the wheels. Further examples of metrics which may be used is data from an inertial measurement unit, steering wheel angle, wheel speed sensors, slip ratio, and vertical load.

## Claims

1. A method (100) for estimating friction between a road surface and one or more wheels of a vehicle, the method (100) comprising:
adjusting (S104) a steering angle of a first steerable wheel of the vehicle to achieve a defined steering angle offset between the first steerable wheel and a second steerable wheel of the vehicle for a defined period of time, wherein the adjusted steering angle of the first steerable wheel is greater than a requested steering angle of the first steerable wheel; and
determining (S110) a friction estimate between the road surface and the first steerable wheel based on measured tire dynamics of the first steerable wheel.

2. The method (100) according to claim 1, wherein adjusting (S104) the steering angle of the first steerable wheel is performed before entering or during a corner, and
wherein the first steerable wheel is an inner steerable wheel and the second steerable wheel is an outer steerable wheel of the vehicle.

3. The method (100) according to claim 1 or 2, further comprising determining (S102) if a corner is present in a driving trajectory of the vehicle, and
wherein adjusting (S104) the steering angle of the first steerable wheel for the defined period of time is performed before entering or during said corner.

4. The method (100) according to any one of the claims 1 to 3, wherein adjusting (S104) the steering angle of the first steerable wheel comprises increasing (S106) the steering angle of the first steerable wheel relative the requested steering angle of the first steerable wheel by a defined value.

5. The method (100) according to any one of the claims 1 to 4, wherein adjusting (S104) the steering angle of the first steerable wheel comprises increasing (S106) the steering angle of the first steerable wheel until a peak in an estimated aligning moment of the first steerable wheel has been reached.

6. The method (100) according to any one of the claims 1 to 5, wherein the period of time during which the steering angle of the first steerable wheel is adjusted (S104), runs until a peak in an estimated aligning moment of the first steerable wheel has been reached.

7. The method (100) according to any one of the claims 1 to 6, further comprising adjusting (S108) a steering angle of the second steerable wheel by reducing the steering angle of the second steerable wheel relative a requested steering angle of the second steerable wheel.

8. The method (100) according to any one of the claims 1 to 7, wherein determining (S110) the friction estimate of the road surface is further based on measured tire dynamics of the second steerable wheel.

9. The method (100) according to any one of the claims 1 to 8, wherein the steering angle offset is greater than a steering angle offset during an ordinary driving scenario.

10. The method (100) according to any one of the claims 1 to 9, wherein adjusting (S104) the steering angle of the first steerable wheel is performed during a transient state of the vehicle.

11. The method according to any one of the claims 1 to 10, wherein adjusting (S104) the steering angle of the first steerable wheel is performed in response to a current driving environment of the vehicle fulfilling a defined driving environment condition.

12. The method (100) according to any one of the claims 1 to 11, further comprising, in response to the determined friction estimate being below a threshold value, adjusting (S112) the steering angle of the first and second steerable wheel based on the determined friction estimate to control the driving trajectory of the vehicle.

13. A computer program product comprising instructions which, when the program is executed by a computing device, causes the computing device to carry out the method (100) according to any one of claims 1 to 12.

14. A device (200) for estimating friction between a road surface and one or more wheels of a vehicle, the device (200) comprising control circuitry (202) configured to:
adjust a steering angle of a first steerable wheel of the vehicle to achieve a defined steering angle offset between the first steerable wheel and a second steerable wheel of the vehicle for a defined period of time, wherein the adjusted steering angle of the first steerable wheel is greater than a requested steering angle of the first steerable wheel; and
determine a friction estimate between the road surface and the first steerable wheel based on measured tire dynamics of the first steerable wheel.

15. A vehicle (300) comprising a device (200) according to claim 14, for estimating friction between a road surface and one or more wheels of the vehicle.
